# EUROPÄISCHE PATENTANMELDUNG

(11) **EP 4 277 060 A1**
(43) Veröffentlichungstag der Anmeldung: **15.11.2023**
(21) Anmeldenummer: 23172170.5
(22) Anmeldetag: 09.05.2023
(51) Int. Cl.: H02G 1/14, B25B 31/00, F16L 5/06, F16L 37/00, F16L 41/14, H02G 3/06, H02G 15/04, H02G 3/22

(54) **VERFAHREN ZUM BEFESTIGEN EINER KABELVERSCHRAUBUNG AN EINER WANDUNG UND EIN DEFORMATIONSWERKZEUG ZUM BEFESTIGEN EINER KABELVERSCHRAUBUNG**

(30) Priorität: 09.05.2022 CH 5372022
(71) Anmelder: Agro AG, 5502 Hunzenschwil (CH)
(72) Erfinder: Urech, Cédric, 5000 Aarau (CH); Fuhrer, Stefan, 5614 Sarmenstorf (CH); Rosamilia, Valerio, 5502 Hunzenschwil (CH)
(74) Vertreter: Rentsch Partner AG

(57) **Zusammenfassung**

Die vorliegende Erfindung bezieht sich auf ein Verfahren zum Befestigen einer Kabelverschraubung (1) an einer Wandung (3) sowie ein Deformationswerkzeug, welches sich zum Durchführen des Verfahrens eignet. Das Verfahren umfasst die folgenden Verfahrensschritte: Bereitstellen der Kabelverschraubung (1) umfassend einen Stutzen (4) mit einem Deformationsabschnitt (8) und ein Spannelement (9). Bereitstellen des Deformationswerkzeuges (2) und Einstecken des Stutzens (4) in eine Wandungsöffnung, sodass der Deformationsabschnitt (8) zumindest bereichsweise von einer Rückseite (11) der Wandung (3) abragt. Deformieren des Deformationsabschnitts (8) durch das Deformationswerkzeug (2), sodass der Deformationsabschnitt (8) radial zumindest bereichsweise über eine Kontur der Wandungsöffnung hinausragt und dadurch der Kragen (13) an die Vorderseite (10) der Wandung (3) gezogen und die Wandung (3) zwischen dem Kragen (4) und dem Deformationsabschnitt (8) geklemmt wird. Entfernen des Deformationswerkzeugs (2) und Befestigen des Spannelementes (9) von der Vorderseite (10) der Wandung (3) her.

## Beschreibung

Die vorliegende Erfindung bezieht sich auf ein Verfahren zum Befestigen einer Kabelverschraubung an einer Wandung, insbesondere durch Deformation, ein Deformationswerkzeug zum Befestigen einer Kabelverschraubung sowie auf ein Gehäuse mit einer Kabelverschraubung.

Aus dem Stand der Technik sind herkömmliche Kabelverschraubungen mit einem Stutzen bekannt, welcher mit einem röhrenförmigen Abschnitt durch eine Wandungsöffnung gesteckt wird. Auf dem rückseitig der Wandung hervorragenden röhrenförmigen Abschnitt ist ein Aussengewinde angeordnet, an welches z.B. eine Mutter geschraubt werden kann um die Wandung zwischen der rückseitigen Mutter und dem vorderseitigen Stutzen zu klemmen und so die Kabelverschraubung in der Wandungsöffnung zu befestigen.

Zur Befestigung der Kabelverschraubung muss die Wandungsöffnung also für einen Monteur von beiden Seiten (Vorderseite und Rückseite der Wandung) zugänglich sein. Weiterhin kann die Verschraubung nachträglich manipuliert werden.

Eine Aufgabe der Erfindung besteht darin ein vereinfachtes Verfahren zum Befestigen von Kabelverschraubungen, insbesondere lediglich von einer Seite der Wandung aus, bereitzustellen. Es ist eine weitere Aufgabe der Erfindung ein Verfahren zum Befestigen von Kabelverschraubungen mit einer verbesserten Manipulationssicherheit bereitzustellen. Es ist zudem eine Aufgabe der Erfindung ein Werkzeug zum Befestigen von Kabelverschraubungen an einer Wandung, insbesondere lediglich von einer Seite der Wandung aus, bereitzustellen.

Das erfindungsgemässe Verfahren zum Befestigen einer Kabelverschraubung an einer Wandung umfasst die folgenden Verfahrensschritte:
a) Bereitstellen der Kabelverschraubung umfassend einen Stutzen und ein Spannelement, sowie optional ein Dichtelement, welches zwischen dem Stutzen und dem Spannelement angeordnet werden kann. Der Stutzen weist hierbei eine sich von einem vorderseitigen Ende zu einem rückseitigen Ende des Stutzens erstreckende Durchgangsöffnung für ein Kabel auf. Im Bereich des rückseitigen Endes des Stutzens ist ein röhrenförmiger Deformationsabschnitt angeordnet. Mit Vorteil erstreckt sich dieser vom rückseitigen Ende des Stutzens aus. An dem vorderseitigen Ende des Stutzens kann hingegen das Spannelement befestigbar sein. Hierzu kann der Stutzen an dem vorderseitigen Ende ein Aussengewinde aufweisen, auf welchem das Spannelement anschraubbar ist. Der Stutzen umfasst weiter einen Kragen zur Auflage an der Wandung, insbesondere zur Auflage an der Vorderseite der Wandung. Der Kragen verhindert, dass der Stutzen durch die Wandungsöffnung hindurchrutscht und positioniert die Durchgangsöffnung möglichst senkrecht zur Wandung.
b) Bereitstellen eines Deformationswerkzeuges, wie nachher eingehender und in verschiedenen möglichen Variationen beschrieben.
c) Einstecken des Stutzens von der Vorderseite der Wandung aus in die Wandungsöffnung, sodass dieser sich zumindest bereichsweise durch die Wandungsöffnung erstreckt. Die Wandungsöffnung erstreckt sich hierbei in eine axiale Richtung (senkrecht zur Wandung). Nach dem Einstecken ragt der Deformationsabschnitt zumindest bereichsweise von einer Rückseite der Wandung ab. D.h. der Stutzen wird von der Vorderseite aus und mit dem rückseitigen Ende vorweg in die Wandungsöffnung gesteckt. Dabei wird der Stutzen soweit in die Wandungsöffnung geschoben, bis das rückseitige Ende des Stutzens mit dem Deformationsabschnitt zumindest bereichsweise auf einer Rückseite der Wandung übersteht. Vorteilhafterweise jedoch soweit in die Wandungsöffnung hinein, bis ebenfalls der Kragen des Stutzens an der Vorderseite der Wandung anliegt.
d) Deformieren des Deformationsabschnitts mit Hilfe des Deformationswerkzeugs, sodass der (deformierte) Deformationsabschnitt (aus der axialen Richtung betrachtet) radial zumindest bereichsweise über eine Kontur der Wandungsöffnung hinausragt. Auf diese Weise wird der Kragen an die Vorderseite der Wandung gezogen und die Wandung zwischen dem Kragen und dem (deformierten) Deformationsabschnitt geklemmt. Je nach Ausgestaltung können zwischen dem Kragen und dem deformierten Deformationsabschnitt neben der Wandung noch weitere Teile angeordnet und/oder eingeklemmt werden. Beispielsweise kann zwischen dem Kragen und der Wandung ebenfalls eine Dichtung, insbesondere eine ringförmige Dichtung wie ein O-Ring oder eine (andersartige) Dichtschicht, angeordnet sein.
e) Entfernen des Deformationswerkzeugs und f) Befestigen des Spannelementes an dem vorderseitigen Ende des Stutzens und von der Vorderseite der Wandung her. Vor dem Befestigen des Spannelementes kann (selbstverständlich) ein Kabel durch die Kabelverschraubung geführt werden. Falls ein Dichtelement vorhanden ist, kann dieses vor dem Befestigen des Spannelementes zumindest bereichsweise in dem Stutzen positioniert werden, bevor das Spannelement an dem Stutzen befestigt wird und/oder das Kabel durchgeführt wird.

Mit Vorzug wird zur Durchführung des Verfahrens der Stutzen zuerst an dem Deformationswerkzeug angebracht und anschliessend mit diesem gemeinsam in die Wandungsöffnung eingesteckt. Alternativ kann der Stutzen jedoch auch zuerst in die Wandungsöffnung eingesteckt werden, bevor das Deformationswerkzeug bereichsweise in die Durchgangsöffnung des in der Wandungsöffnung eingesteckten Stutzens eingeführt wird.

Mit Vorteil kann das Deformationswerkzeug von der Vorderseite der Wandung aus betätigt werden. Hierzu kann das Deformationswerkzeug bereichsweise von dem vorderseitigen Ende des Stutzens in die Durchgangsöffnung eingebracht werden, wie nachstehend detaillierter beschrieben. Alternativ ist jedoch ebenfalls denkbar, dass das Deformationswerkzeug rückseitig in die Durchgangsöffnung eingesteckt wird. Die Einführung des Deformationswerkzeugs von dem vorderseitigen Ende des Stutzens ist hierbei dadurch möglich, dass ein Querschnitt des Deformationswerkzeuges (senkrecht zur axialen Richtung) veränderbar ist. Demnach kann das bereitgestellte Deformationswerkzeuges einen (lokal) veränderbaren Querschnitt aufweisen. Der veränderbare Querschnitt ist mit Vorteil an einem rückseitigen Ende des Deformationswerkzeugs angeordnet, welches in die Durchgangsöffnung einführbar ist.

Anlehnend dazu kann das Verfahren die folgenden optionalen Verfahrensschritte aufweisen: Zumindest bereichsweise Einführen des Deformationswerkzeugs in die Durchgangsöffnung, insbesondere durch die Durchgangsöffnung von dem vorderseitigen Ende des Stutzens aus. Radiales Aufweiten des veränderbaren Querschnitts des Deformationswerkzeuges von einem ersten auf einen zweiten Querschnitt. Der zweite Querschnitt ist mit Vorteil grösser als der erste Querschnitt. Ebenfalls denkbar sind jedoch auch Variationen bei denen der zweite Querschnitt gleich gross und/oder gleich geformt ist, jedoch anders als der erste Querschnitt ausgerichtet ist. Während und/oder vor der Deformation kann dem Deformationswerkzeug (insbesondere dem mindestens einen Deformationskörper und/oder dem Deformationsabschnitt) ebenfalls ein Schmiermittel zugeführt werden.

Beim Einführen des Deformationswerkzeugs kann der veränderbare Querschnitt den ersten Querschnitt aufweisen. Das Deformationswerkzeug kann zudem so weit eingeführt werden, dass der veränderbare Querschnitt in axialer Richtung im Bereich des Deformationsabschnitts und/oder hinter dem rückseitigen Ende des Stutzens angeordnet ist. Mit Vorteil wird jedoch das Deformationswerkzeug soweit durchgeführt, dass der veränderbare Querschnitt in axialer Richtung hinter dem rückseitigen Ende des Stutzens angeordnet ist.

Die Deformation kann durch das Aufbringen einer radialen und/oder axialen Deformationskraft erfolgen. Beispielsweise kann der Deformationsabschnitt durch das Aufbringen einer Deformationskraft von innen nach aussen radial aufgeweitet werden, indem der veränderbare Querschnitt innerhalb des Deformationsabschnitts radial erweitert wird. Vorteilhafterweise wird die Deformation jedoch durch das Aufbringen einer axialen Deformationskraft durchgeführt. Demnach kann das Verfahren den folgenden optionalen Verfahrensschritt aufweisen: Verschieben des aufgeweiteten zweiten Querschnitts von dem rückseitigen Ende des Stutzens in Richtung der Wandungsöffnung, sodass der Deformationsabschnitt in axialer Richtung und von dem rückseitigen Ende her sukzessive durch diesen radial aufgeweitet (und somit deformiert) wird.

Alternativ zu der sukzessiven Aufweitung des Deformationsabschnitts von dem rückseitigen Ende her, kann der Deformationsabschnitt auch derart ausgelegt sein, dass dieser bei Aufbringung der Deformationskraft sich nach aussen ausbaucht und/oder sich zusammenfaltet. Die Ausbauchung und anschliessende Zusammenfaltung ähnelt hierbei den Vorgang der Deformation einer Niete. Durch das Ausbauchen erlangt der Deformationsabschnitt ebenfalls einen grösseren (zweiten) Querschnitt. Ergänzend dazu kann der Deformationsabschnitt nach dem Ausbauchen sich ebenfalls zusammenfalten. D.h. der ausgebauchte Deformationsabschnitt kann derart weiter deformiert werden, dass sich dieser faltet und aufeinanderlegt und der Deformationsabschnitt einen gefalteten Bund mit einem zweiten Querschnitt ausbildet, respektive der Bund radial zumindest bereichsweise über die Kontur der Wandungsöffnung hinausragt.

Je nach Ausgestaltung und angedachter Deformation kann der Deformationsabschnitt mindestens Dünnstelle (z.B. eine Materialschwächung) und/oder einen Durchbruch (z.B. in Form einer Tasche und/oder einem Schlitz) aufweisen. Für das oben beschriebene Zusammenfalten kann die Dünnstelle zumindest bereichsweise um die Durchgangsöffnung umlaufend angeordnet und dazu ausgelegt sein, dass der Deformationsabschnitt an dieser während der Deformation nach aussen ausbaucht und/oder sich an dieser Stelle zusammenfaltet. Ebenfalls denkbar sind mehrere um den Umfang verteilt angeordnete Durchbrüche und/oder Dünnstellen zwischen denen (gut deformierbare) Stege ausgeformt werden.

Bei einer Montage von der Vorderseite ist es für einen Monteur nicht einsehbar, wieviel des Deformationsabschnitts bereits deformiert wurde. Daher ist es vorteilhaft, wenn die Deformation beim Erreichen eines definierten Kraftniveaus der Deformationskraft automatisch beendet wird. Alternativ ist ebenfalls denkbar, dass die die Deformation beim Erreichen eines zurückgelegten Verschiebungsweges eines Bereichs des Deformationswerkzeugs, insbesondere des nachher eingehender beschriebenen Dorns, automatisch beendet wird. Demnach kann das Verfahren die folgenden optionalen Verfahrensschritte aufweisen: Aufbringen einer Deformationskraft; und Automatisches Beenden der Deformation beim Erreichen eines definierten Kraftniveaus der Deformationskraft. Im Fall, dass die Deformation des Deformationsabschnitts sukzessive vom rückseitigen Ende ausgehend passiert, wird die Deformation durch das Aufbringen einer Deformationskraft in axialer Richtung erzeugt. Diese axiale Deformationskraft kann also eine Zugkraft sein, welche normal zur Vorderseite der Wandung gerichtet ist. Erreicht die Deformation einen wandungsnah angeordneten Bereich des Deformationsabschnitts steigt folglich die benötigte axiale Deformationskraft. Das definierte Kraftniveau kann also so gewählt werden, dass dieses überschritten wird, wenn der rückseitig angeordnete Deformationsabschnitt im Wesentlichen gänzlich radial aufgeweitet ist, respektive die Deformation den wandungsnah angeordneten Bereich des Deformationsabschnitts erreicht hat.

Je nach Anwendung kann die Deformation lediglich an diskreten Punkten um den Umfang des Deformationsabschnitts erfolgen. Dies hat den Vorteil, dass die benötigte Deformationskraft im Vergleich zur vollständig umfänglichen Deformation vergleichsweise klein ist. Beispielsweise kann der Deformationsabschnitt nach dem Deformieren aus axialer Richtung betrachtet einen im Wesentlichen eckigen Querschnitt aufweisen. D.h. der zweite Querschnitt des veränderbaren Querschnitts des Deformationswerkzeugs kann eckig sein. Beispielsweise kann der veränderbare Querschnitt von einem runden (ersten) Querschnitt zu einem eckigen (zweiten) Querschnitt veränderbar sein. In anderen Worten kann der erste Querschnitt rund und der zweite Querschnitt eckig ausgestaltet sein. Unter eckig wird verstanden, dass die Ecken des eckigen Querschnitts durchaus noch Radien aufweisen können.

Die vorliegende Erfindung bezieht sich ebenfalls auf ein Deformationswerkzeug zum Befestigen eines Stutzens einer Kabelverschraubung, insbesondere durch Deformation eines Deformationsabschnitt des Stutzens, in einer Wandungsöffnung. Die oben beschriebene Deformation kann mit dem erfindungsgemässen Deformationswerkzeug erzeugt werden. D.h. die vorliegende Erfindung bezieht sich ergänzend auf ein Deformationswerkzeug zum Ausführen des erläuterten erfindungsgemässen Verfahrens. Die nachstehend beschriebenen Ausführungsformen des Deformationswerkzeuges offenbaren demnach weitere mögliche Ausführungsformen zur Durchführung des Verfahrens und die zuvor beschriebenen Ausführungsformen des Verfahrens offenbaren zugleich auch entsprechend ausgestaltete Ausführungen des Deformationswerkzeuges.

Das erfindungsgemässe Deformationswerkzeug dient zum Befestigen eines Stutzens einer Kabelverschraubung, insbesondere mit einem Deformationsabschnitt, in einer Wandungsöffnung. Das Deformationswerkzeug umfasst hierzu einen Dorn und eine zu dem Dorn relativ verschiebbare, insbesondere in eine axiale Richtung verschiebbare, erste Hülse, welche auf dem Dorn angeordnet ist. (Während in Kontext der Beschreibung des Verfahrens die axiale Richtung senkrecht zur Wandung definiert war, ist die axiale Richtung im Kontext der Beschreibung des Deformationswerkzeugs entlang der Mittelachse des Dorns / der ersten Hülse definiert. Bei der Ausführung des Verfahrens ist die Mittelachse des Dorns jedoch mit Vorzug senkrecht zur Wandung orientiert und die Bezeichnungen stimmen überein.) Der Dorn erstreckt sich somit in die axiale Richtung von einem vorderseitigen Ende zu einem rückseitigen Ende des Dorns. Weiterhin ist an der ersten Hülse an einem rückseitigen Ende mindestens ein radial verschiebbarer Deformationskörper angeordnet. Das rückseitige Ende der ersten Hülse zeigt hierbei zum rückseitigen Ende des Dorns. Je nach Ausgestaltung kann die radiale Verschiebung des Deformationskörpers ebenfalls durch eine zumindest bereichsweise Deformation desselben erfolgen. Der Deformationskörper kann hierzu unterschiedlich ausgestaltet sein, wie nachstehend eingehender beschrieben. Der mindestens eine Deformationskörper kann grundsätzlich ein von der ersten Hülse separat ausgestalteter Körper sein oder integral an der ersten Hülse angeformt sein.

Der Dorn umfasst weiter mindestens eine schräge Lauffläche für den oder die Deformationskörper. Die Lauffläche ist mit Vorteil in Bezug zur Mittelachse des Dorns schräg zulaufend. Je nach Ausgestaltung kann sich die Lauffläche in axialer Richtung von der Mittelachse des Dorns zum rückseitigen und/oder zum vorderseitigen Ende des Dorns hin entfernen. Ebenfalls denkbar ist eine wellenartige Lauffläche in eine Umfangsrichtung des Dorns oder eine oder mehrere helixartig entlang des Dorns angeordnete Laufflächen. Der jeweilige Verlauf der Lauffläche kann sich also in axialer Richtung und/oder Umfangsrichtung erstrecken. Der Verlauf kann zudem linear oder kurvenartig sein. Bei einem relativen Verschieben des Dorns im Bezug zur ersten Hülse läuft der mindestens eine Deformationskörper so entlang der mindestens einen Lauffläche und wird radial verschoben. Mit Entlanglaufen des mindestens einen Deformationskörpers sind Variationen gemeint, bei dem der mindestens eine Deformationskörper an der mindestens einen Lauffläche abgleitet und/oder abrollt. Je nach Anwendung, kann ebenfalls pro Deformationskörper eine Lauffläche in Form einer Rille vorgesehen sein. Dies hat den Vorteil, dass die Deformationskörper mehr als nur einen Auflagepunkt zur Lauffläche aufweist und die Flächenpressung besser verteilt wird.

Der Bereich des Deformationswerkzeugs mit dem mindestens einen Deformationskörper stellt somit den zuvor beschriebenen Bereich des Deformationswerkzeugs mit dem veränderbaren Querschnitt dar, bzw. bildet diesen aus. Somit kann das radiale Aufweiten des veränderbaren Querschnitts von dem ersten auf den zweiten Querschnitt durch relatives Verschieben (in axialer Richtung und/oder durch Rotation) des Dorns in Bezug zur ersten Hülse erfolgen, sodass der mindestens eine / die jeweiligen Deformationskörper entlang der mindestens einen Lauffläche des Dorns laufen und sich radial nach aussen verschieben. In anderen Worten kann der eine Deformationskörper oder können die mehreren Deformationskörper durch das relative Verschieben des Dorns zur ersten Hülse von einer ersten Position, in welcher die jeweiligen Deformationskörper radial innerhalb einer Einführkontur des Deformationswerkzeuges angeordnet sind (d.h. der veränderbare Querschnitt den ersten Querschnitt aufweist), in eine zweite Position, in welche die Deformationskörper bereichsweise radial ausserhalb der Einführkontur angeordnet sind (d.h. der veränderbare Querschnitt den zweiten Querschnitt aufweist), verschiebbar sein. Die Einführkontur des Deformationswerkzeuges entspricht einer äusseren Kontur des rückseitigen Endes der ersten Hülse. In der Anwendung entspricht die Einführkontur zudem in der Regel im Wesentlichen der Kontur der Durchgangsöffnung des Stutzens. Zur Entnahme des Deformationswerkzeuges kann der Dorn, z.B. zum rückseitigen Ende der ersten Hülse hin, (zurück-) verschoben werden, sodass die Deformationskörper sich wieder radial nach innen bewegen. Der veränderliche Querschnitt des Deformationswerkzeugs weist dann wieder den ersten Querschnitt auf und kann durch die Durchgangsöffnung entnommen werden.

Für eine vergleichsweise geringe Deformationskraft können mehrere Deformationskörper vorhanden sein, welche vorteilhafterweise um den Umfang der ersten Hülse und/oder des Dorns verteilt angeordnet sind. Die Deformation findet dann nur an diskreten Punkten des Deformationsabschnitts statt und die mehreren Deformationskörper können einen eckigen zweiten Querschnitt des Deformationswerkzeugs (wie zuvor beschrieben) erzeugen. Beispielsweise können mindestens zwei oder mindestens drei Deformationskörper vorhanden sein. Jedoch ist auch eine andere Anzahl von Deformationskörpern, wie z.B. fünf oder sechs Deformationskörpern, denkbar.

Die jeweiligen (mehreren) Deformationskörper können z.B. Kugeln, Tonnen, Schiebern und/oder Stössel oder ähnliches sein. Vorteilhafterweise ist der mindestens eine Deformationskörper in axialer Richtung abgeschrägt und/oder abgerundet, wobei die Schräge oder die Rundung zum rückseitigen Ende hin radial nach aussen verläuft. In einer möglichen Ausführungsform weist das rückseitige Ende der ersten Hülse mehrere sich in axialer Richtung erstreckende Schlitze auf, so dass zwischen den Schlitzen die Deformationskörper in Form von radial deformierbaren Zungen ausgebildet werden. Die Zungen können weiter in axialer Richtung und an einer zum Dorn hingewandten Innenseite keilförmig sein. In diesem Fall sind die Deformationskörper, respektive die Zungen also integral an der Hülse angeformt.

Die radiale Verschiebung der jeweiligen Deformationskörper kann gemeinsam oder nacheinander erfolgen. Eine jeweilige separate Verschiebung der mehreren Deformationskörper nacheinander kann z.B. durch eine pneumatische oder hydraulische Steuerung realisiert werden oder alternativ durch eine Rotation des Dorns in Relation zur ersten Hülse und mindestens einer (nicht rotationssymmetrischen) Lauffläche, welche sich zumindest bereichsweise im Umfangsrichtung erstreckt. Beispielsweise kann die mindestens eine Lauffläche exzentrisch ausgestaltet sein.

Ebenfalls denkbar ist eine Ausführung eines radial deformierbaren ringartigen Deformationskörpers, welcher das rückseitige Ende des Dorns umfangseitig zumindest bereichsweise umgibt. Der ringartige Deformationskörper kann z.B. ein Torus und/oder ein zumindest bereichsweise umlaufender Draht sein. Der ringartige Deformationskörper kann beispielsweise ein elastisches Material umfassen. Ebenfalls denkbar ist jedoch auch eine Ausführung aus Metall, wie z.B. einem Federstahl. Der ringartige Deformationskörper kann dann ebenfalls einen Schlitz aufweisen. Der Schlitz kann hierbei den ringartigen Deformationskörper von innen nach aussen durchbrechen. Dies vereinfacht eine radiale Deformation, da der Schlitz bei der Deformation des Deformationskörpers seine Breite verändern kann. Durch eine relative Verschiebung des Dorns zur ersten Hülse kann der ringartige Deformationskörper entlang einer Lauffläche radial nach aussen verschoben und deformiert (aufgeweitet) werden. Alternativ ist bei der Ausgestaltung aus einem elastischen Material auch eine radiale Verschiebung durch Kompression des elastischen Material in axialer Richtung denkbar. Z. B. kann durch eine relative Verschiebung der ersten Hülse und des Dorns eine Einklemmung des ringartigen Deformationskörpers aus dem elastischen Material zwischen der ersten Hülse und dem Dorn erzielt werden, so dass sich dieser in radialer Richtung nach aussen deformiert / bereichsweise radial nach aussen verschiebt.

Für ein gutes Abgleiten und/oder Abrollen der mindestens einen Lauffläche eignen sich Deformationskörper mit einem runden Querschnitt, wie z.B. bei Kugeln oder einem Torus. Der mindestens eine Deformationskörper kann jedoch ebenfalls z.B. hohlzylinderförmig, zylinderförmig, tonnenförmig oder polygonal ausgestaltet sein. Mit Vorteil entfernt sich die mindestens eine Lauffläche in axialer Richtung von einer Mittelachse des Dorns zu einem rückseitigen Ende des Dorns hin. Läuft der mindestens eine Deformationskörper die Lauffläche hinauf, d.h. zu dem rückseitigen Ende des Dorns hin, wird dieser dadurch radial nach aussen gedrückt. Der mindestens eine Deformationskörper tritt so nach aussen über die Kontur des rückseitigen Endes der ersten Hülse hervor. Diese Ausgestaltung eignet sich besonders bei der Verwendung von mehreren separaten Deformationskörpern, wie z.B. Kugeln oder Tonnen. Bei der oben beschriebenen Ausgestaltung von Deformationskörpern in Form von Zungen kann sich die mindestens eine Lauffläche alternativ auch in axialer Richtung von der Mittelachse des Dorns zu dem vorderseitigen Ende des Dorns hin entfernen. Wird die erste Hülse mit den Zungen zu dem vorderseitigen Ende des Dorns hin verschoben, gleiten die keilförmigen Zungen an der mindestens einen Lauffläche entlang und die Zungen werden radial nach aussen deformiert. In der nach aussen deformieren Position bilden diese den zweiten Querschnitt des Deformationswerkzeugs aus. Eine Ausgestaltung mit Zungen und einer Lauffläche, die sich in axialer Richtung von der Mittelachse des Dorns und zu dem rückseitigen Ende des Dorns hin entfernt ist jedoch ebenfalls denkbar.

Je nach Ausgestaltung kann der Dorn zudem an seinem rückseitigen Ende einen Anschlag für die erste Hülse in axialer Richtung aufweisen. Mit Vorteil liegt die erste Hülse am Anschlag des Dorns an, wenn die Deformationskörper in der zweiten Position sind. Dies erlaubt ein definiertes Ende der Deformation und einen reproduzierbar aufgeweiteten Querschnitt des Deformationsabschnitts.

Wenn mehrere (separate) Deformationskörper vorhanden sind, sind diese für eine gute Handhabung mit Vorteil unverlierbar in einem Käfig der ersten Hülse gehalten. Hierzu kann die erste Hülse zur Ausbildung des Käfigs z.B. mehrteilig ausgestaltet sein. Beispielsweise kann die erste Hülse einen Schaft umfassen, an dessen rückseitigen Ende Aufnahmeöffnungen für die jeweiligen Deformationskörper angeordnet sind. Die Aufnahmeöffnungen erstrecken sich von dem rückseitigen Ende des Schafts in axialer Richtung in den Schaft hinein. Weiterhin sind die Aufnahmeöffnungen in radialer Richtung je zu einer Innenseite und einer Aussenseite des Schafts, respektive der ersten Hülse hin offen. Die Innenseite zeigt hierbei in Richtung der Mittelachse der ersten Hülse. Die jeweiligen Aufnahmeöffnungen formen also je einen radialen Durchbruch durch die erste Hülse. Das rückseitige Ende des Schafts kann somit entlang des Umfangs zinnenartig ausgestaltet sein. An dem rückseitigen Ende des Schafts kann wiederum eine ringförmige Abdeckung der ersten Hülse angebracht werden, welche die jeweiligen Aufnahmeöffnungen in axialer Richtung abdeckt und ein Herausfallen der Deformationskörper in diese Richtung verhindert. Um die radiale Verschiebung der Deformationskörper, insbesondere in Form von Kugeln, zuzulassen, ohne dass diese in die radiale Richtung verloren gehen, können die jeweiligen Aufnahmeöffnungen aus der axialen Richtung betrachtet zumindest bereichsweise zylindrisch ausgestaltet sein. Mit Vorteil weist die Aufnahmeöffnung einen tonnenartigen Querschnitt der Aufnahmeöffnung (aus der axialen Richtung betrachtet) auf mit einer ersten Öffnung zur Innenseite und einer zweiten Öffnung zur Aussenseite der ersten Hülse. Die erste und zweite Öffnung sind hierbei derart dimensioniert, dass die jeweiligen Deformationskörper bereichsweise aus der ersten und zweiten Öffnung herausragen können, jedoch ohne dass diese gänzlich verloren gehen können. Bei der Verwendung von Kugeln, ist der Abstand der ersten Öffnung zur zweiten Öffnung z.B. kleiner als ein Durchmesser der jeweiligen Kugeln. Der Käfig, respektive die erste Hülse kann zumindest bereichsweise aus ein selbstschmierendem Sinter-Material bestehen. Alternativ kann der Käfig und/oder Deformationskörper ebenfalls Schmiermittel umfassen.

Für eine gute Positionierung des Stutzens umfasst das Deformationswerkzeug weiter eine die erste Hülse umgebene zweite Hülse. Somit kann zwischen der ersten und zweiten Hülse ein Aufnahmeraum für den Stutzen gebildet werden. Die erste Hülse, insbesondere der Schaft, kann an einer Aussenseite eine Aufnahmefläche für den Stutzen aufweisen. Diese begrenzt also bereichsweise den Aufnahmeraum. Mit Vorteil ist der Aufnahmeraum zudem derart ausgelegt, dass dieser das vorderseitige Ende des Stutzens, welcher in dem Aufnahmeraum angeordnet ist, umgibt. D.h., dass das vorderseitige Ende des Stutzens keine Kraft aufnehmen muss. Stattdessen kann die zweite Hülse in axialer Richtung lediglich über eine (erste) Schulter mit dem Kragen des Stutzens wirkverbindbar sein, respektive lediglich mit der ersten Schulter an dem Stutzen am Kragen in axialer Richtung anliegen. Für eine sauber positionierte Kabelverschraubung ist es weiterhin sinnvoll, dass die zweite Hülse nicht in direkten Kontakt mit der Wandung tritt. Besser ist es, wenn diese nur über den an der Wandung anliegenden Kragen an dieser ausrichtbar ist. Für eine einfache Bedienbarkeit des Deformationswerkzeugs kann in radialer Richtung zwischen dem Dorn und der ersten Hülse und/oder zwischen der ersten Hülse und der zweiten Hülse je mindestens ein Gleitlager angeordnet sein.

Für einen guten Sitz des Stutzens in dem Aufnahmeraum, kann das Deformationswerkzeug, insbesondere die zweite Hülse, ein Klemmelement zum klemmenden Halten des Stutzens, insbesondere des Kragens, in dem Aufnahmeraum aufweisen. Das Klemmelement kann beispielsweise eine den Aufnahmeraum ringförmig umgebene X-Dichtung oder Feder oder ähnliches sein.

Für eine einfache Handhabung des Deformationswerkzeugs ist es vorteilhaft, wenn eine Eindringtiefe der ersten Hülse durch die Wandungsöffnung definiert wird. Hierzu kann in der zweiten Hülse ein Anschlag für die erste Hülse in axialer Richtung angeordnet sein. Der Anschlag kann von einer an einer Aussenseite der ersten Hülse angeordneten (zweite) Schulter und einer an einer Innenseite der zweiten Hülse angeordneten (dritte) Schulter ausgebildet werden. Der Anschlag ist mit Vorteil derart angeordnet, dass wenn ein in der zweiten Hülse angeordneter Stutzen an der Vorderseite der Wandung aufliegt, und die erste Hülse an dem Anschlag an der zweiten Hülse anliegt, die Deformationskörper in axialer Richtung hinter dem Deformationsabschnitt des Stutzens angeordnet sind. Hierzu kann das Deformationswerkzeug weiter eine Feder umfassen, welche die erste und die zweite Hülse gegeneinander, insbesondere gegen den entsprechenden Anschlag, vorverspannt. Die Feder bewirkt, dass nach dem Deformieren und nach dem Zurückverschieben des Dorns ebenfalls der Käfig der ersten Hülse wieder komplett aus dem Stutzen herausgeschoben wird.

Die Erfindung bezieht sich weiter auf ein Gehäuse mit einer in einer Wandung des Gehäuses angeordneten Wandungsöffnung, in welcher ein Stutzen einer Kabelverschraubung irreversibel befestigt ist. Hierzu ist ein Deformationsabschnitt des Stutzens derart irreversibel deformiert, dass dieser radial zumindest bereichsweise über eine Kontur der Wandungsöffnung hinausragt und die Wandung zwischen einem Kragen des Stutzens und dem deformierten Deformationsabschnitt geklemmt wird. Mit Vorteil liegt der Kragen des Stutzens hierzu an einer Vorderseite der Wandung und der Deformationsabschnitt an einer Rückseite der Wandung an. Je nach Anwendung kann definitionsgemäss die Vorderseite der Wandung zu einer Aussenseite des Gehäuses oder einer Innenseite des Gehäuses gehören.

Abschliessend sei bemerkt, dass sämtliche zuvor aufgeführten Verfahrensschritte, welche in Kontext des Verfahrens oder des Deformationswerkzeugs beschrieben wurden, in der gelisteten Reihenfolge als auch in einer anderen Reihenfolge durchgeführt werden können.

Anhand der in den nachfolgenden Figuren gezeigten Ausführungsbeispiele und der dazugehörigen Beschreibung werden Aspekte der Erfindung näher erläutert.

Es zeigen:
- Fig. 1: Den Befestigungsvorgang eines Stutzens einer Kabelverschraubung in einer Wandungsöffnung in einem ersten Zustand in einer geschnit-tenen Ansicht;
- Fig. 2: Der erste Zustand gemäss Figur 1 in einer perspektivischen Ansicht;
- Fig. 3: Den Befestigungsvorgang eines Stutzens einer Kabelverschraubung in einer Wandungsöffnung in einem zweiten Zustand in einer geschnit-tenen Ansicht;
- Fig. 4: Der erste Zustand gemäss Figur 3 in einer perspektivischen Ansicht;
- Fig. 5: Den Befestigungsvorgang eines Stutzens einer Kabelverschraubung in einer Wandungsöffnung in einem dritten Zustand in einer geschnit-tenen Ansicht;
- Fig. 6: Der erste Zustand gemäss Figur 5 in einer perspektivischen Ansicht;
- Fig. 7: Eine Wandung eines Gehäuses mit einer montierten Kabelverschraubung.

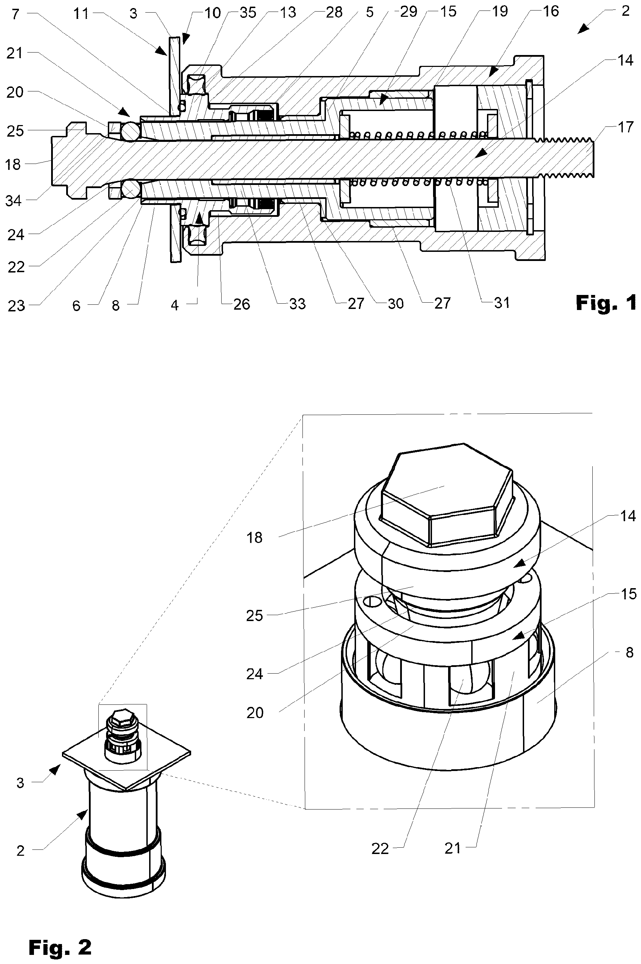

**Figur** 1 bis **Figur** 7 zeigen den Befestigungsvorgang eines Stutzens 4 einer Kabelverschraubung in einer Wandungsöffnung mit einem Deformationswerkzeug 2 jeweils zu verschiedenen Zeitpunkten. Wie erkennbar, umfasst das Deformationswerkzeug 2 einen Dorn 14, welcher sich von einem vorderseitigen zu einem rückseitigen Ende 17, 18 erstreckt. Auf dem Dorn 14 ist eine erste Hülse 15 angeordnet, welche sich ebenfalls von einem vorderseitigen zu einem rückseitigen Ende 19, 20 erstreckt. Die erste Hülse 15 ist wiederum von einer weiteren zweiten Hülse 16 umgeben. Zwischen der ersten und der zweiten Hülse 15, 16 wird ein Aufnahmeraum 26 für den Stutzen 4 der Kabelverschraubung 1 gebildet. Für eine gute Handhabung sind weiterhin diverse Gleitlager 27 zwischen der ersten und der zweiten Hülse 15, 16 sowie dem Dorn 14 und der ersten Hülse 15 angeordnet. Der Stutzen 4 der Kabelverschraubung 1 umfasst hierbei einen (initial hohlzylindrischen) Deformationsabschnitt 8, mit welchem der Stutzen 4 vorweggehend in die Wandungsöffnung eingeführt wird. Am rückseitigen Ende der ersten Hülse 15 befindet sich ein Käfig 21 für mehrere Deformationskörper 22. Die Deformationskörper sind im vorliegenden Beispiel als Kugeln 22 ausgestaltet, jedoch sind auch andere Formen, wie polygone oder zylinderförmige Körper denkbar. Im gezeigten Fall sind insgesamt sechs Kugeln 22 vorhanden. Der Käfig 21 ist derart konzipiert, dass die Kugeln 22 in radialer Richtung verschiebbar sind, ohne dass diese verloren gehen. Die im Käfig 21 angeordneten radial verschiebbaren Kugeln 22 bewirken somit einen (lokalen) veränderbaren Querschnitt des Deformationswerkzeugs 2. Um die radiale Verschiebung der Kugeln 22 zuzulassen, ohne dass diese verloren gehen, kann der Käfig 21 pro Kugel 22 eine Aufnahmeöffnung 23 zur Aufnahme der jeweiligen Kugel 22 aufweisen, welche aus der axialen Richtung betrachtet zumindest bereichsweise zylindrisch ist. Um dies konstruktiv umzusetzen kann die erste Hülse 15, wie in der Schnittansicht gemäss **Figur 1** ersichtlich, zur Ausbildung des Käfigs 21 mehrteilig ausgestaltet sein. Im vorliegenden Fall umfasst die erste Hülse 15 einen Schaft 33 und eine ringförmige Abdeckung 34. Die Aufnahmeöffnungen 23 erstrecken sich in axialer Richtung in ein rückseitiges Ende des Schafts 33 hinein, während die Abdeckung 34 die jeweiligen Aufnahmeöffnungen 23 in axialer Richtung abdeckt.

In **Figur 1** und **Figur 2** ist das in die Wandungsöffnung eingeführte Deformationswerkzeug 2 dargestellt. In dem Deformationswerkzeug 2 ist der (noch undeformierte) Stutzen 4 der Kabelverschraubung angeordnet. Dabei kann der Stutzen 4 vor dem Deformationswerkzeug 2 oder zeitgleich mit dem Deformationswerkzeug 2 in die Wandungsöffnung eingebracht worden sein. In dem dargestellten Zustand des Verfahrens ist der Dorn 14 in die axiale Richtung zur ersten Hülse 15 versetzt angeordnet, sodass der Dorn 14, der Käfig 21 und die Kugeln 22 innerhalb einer Einführkontur des Deformationswerkzeugs 2 (hier Innenkontur der Durchgangsöffnung 7) angeordnet sind. Der veränderbare Querschnitt des Deformationswerkzeugs 2 weist also einen ersten Querschnitt auf, der kleiner als die Einführkontur ist. Das rückseitige Ende 18 des Dorns 14 steht hierbei über die erste Hülse 15 hervor und ein Anschlag 25 des Dorns 14 für die erste Hülse 15 ist mit Vorteil zur ersten Hülse 15 in axialer Richtung beabstandet. Vorderseitig ist erkennbar, dass die zweite Hülse 16 keinen direkten Kontakt mit der Wandung 3 hat. Die zweite Hülse 16 liegt hingegen mit einer ersten Schulter 28 in axialer Richtung an dem an der Wandung 3 anliegenden Kragen 13 des Stutzens 4 an.

Während die erste Schulter 28 also über den Kragen 13 das Deformationswerkzeug 2 zur Wandung 3 positioniert, bildet eine an einer Aussenseite der ersten Hülse 15 angeordneten (zweite) Schulter 29 mit einer an einer Innenseite der zweiten Hülse 16 angeordneten (dritten) Schulter 30 einen Anschlag für die zweite Hülse aus, sodass eine Eindringtiefe der ersten Hülse 15 definiert ist. In gezeigten Fall ist die Eindringtiefe so gewählt, dass der Käfig 21 samt Kugeln 22 rückseitig aus dem Stutzen 4 herausragt. Für einen guten Sitz des Stutzens 4 in dem Aufnahmeraum 26 weist das Deformationswerkzeug 2 ein Klemmelement 35 in Form einer den Aufnahmeraum 26 ringförmig umgebene X-Dichtung auf, die zum klemmenden Halten des Stutzens 4 dient.

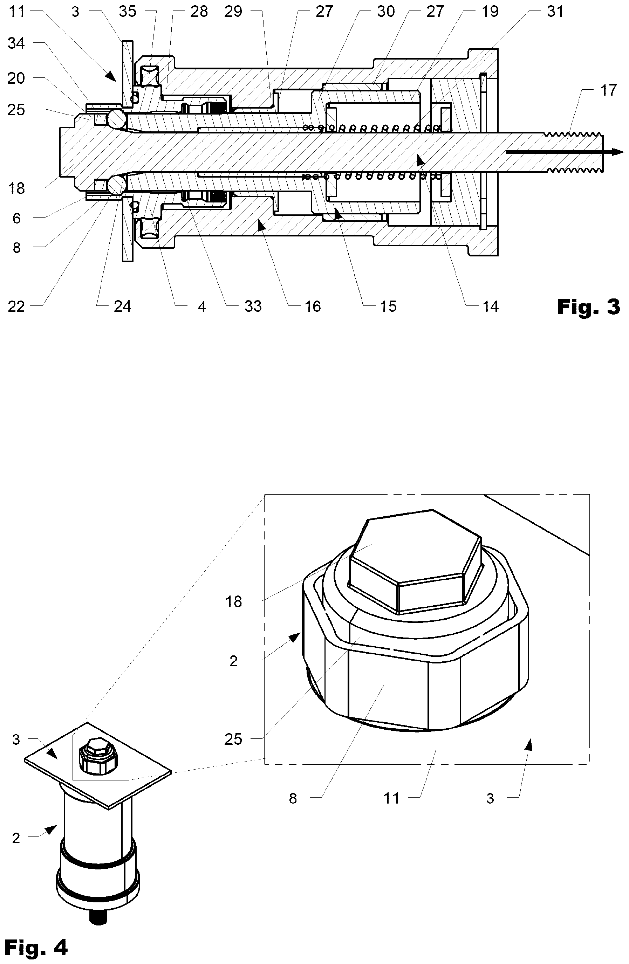

Für das Deformieren wird in einem nächsten Verfahrensschritt der Dorn 14 in axialer Richtung und zu seinem vorderseitigen Ende 17 hin verschoben, bis ein Anschlag 25 des Dorns 14 an das rückseitige Ende 20 der ersten Hülse 15 anschlägt (vgl. **Figur 3**). D.h. die Deformation wird durch Aufbringen einer axialen Deformationskraft als Zugkraft von einer Vorderseite 10 der Wandung initiiert, welche wie darstellt auf den Dorn 14 wirkt. Aufgrund der Verschiebung des Dorns 14 laufen die Kugeln 22 entlang mindestens einer Lauffläche 24 des Dorns 14 entlang und werden durch die Geometrie der mindestens einen Lauffläche 24 radial nach aussen gedrückt. Somit erlangt das Deformationswerkzeug 2 lokal einen zweiten Querschnitt, welcher zumindest bereichsweise über die Einführkontur hinausragt. Wird anschliessend die erste Hülse 15 und der Dorn 14 gemeinsam in die axiale Richtung und in Richtung ihres jeweiligen vorderseitigen Endes 17, 19 verschoben, wird der Stutzen 4, welcher über eine Rückseite 11 der Wandung 3 hinausragt, von einem runden Querschnitt, wie in **Figur 2** dargestellt, zu einem eckigen Querschnitt, wie in **Figur 4** dargestellt, aufgeweitet / deformiert. Es ist ebenfalls erkennbar, dass die Ecken des eckigen Querschnitts keine scharfen Ecken sind, sondern diese jeweils einen Radius aufweisen.

**Figur 3** und **Figur 4** zeigen den Moment, wenn der Dorn 14 und die erste Hülse 15 soweit gemeinsam verschoben wurden, dass im Wesentlichen der gesamte rückseitig über die Wandung hinausragende Deformationsabschnitt 8 des Stutzens 4 sukzessive deformiert und radial aufgeweitet wurde. Zu diesem Zeitpunkt steigt nun aufgrund der Wandung 3 die Deformationskraft in die axiale Richtung. Dies kann sich zu Nutze gemacht werden, indem beim Erreichen eines definierten Kraftniveaus der Deformationskraft der Vorgang des Deformierens automatisch beendet wird.

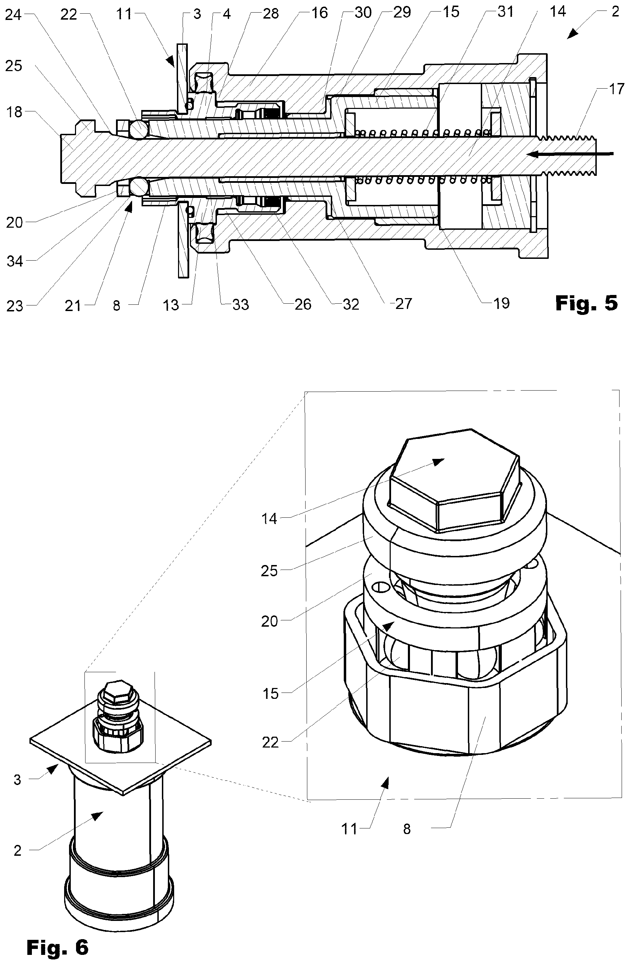

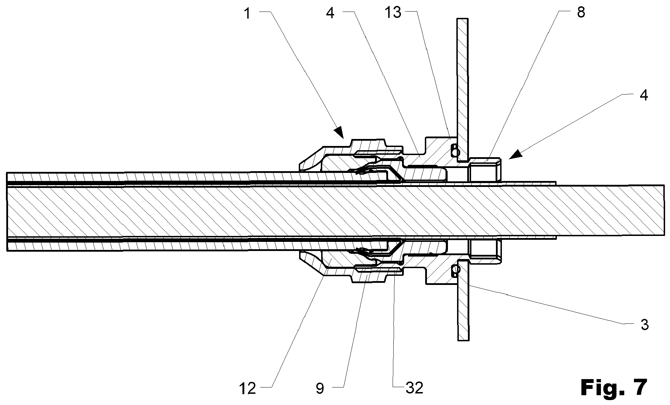

Um das Deformationswerkzeug 2 wieder aus der Wandung 3 entnehmen zu können muss (nach Erreichen des definierten Kraftniveaus) letztendlich der Dorn 14 wieder relativ zur ersten Hülse 15 in Richtung seines rückseitigen Endes 18 zurückverschoben werden, sodass sich die Kugeln 22 wieder radial nach innen verschieben. Dorn 14, Kugeln 22 und Käfig 21 sind dann, wie in **Figur 5** und **Figur 6** dargestellt, wieder innerhalb der Einführkontur des Deformationswerkzeuges 2 angeordnet und dieses kann zur Vorderseite 10 hin aus der Wandungsöffnung entnommen werden. Die Feder 31 verspannt hierzu unterstützend die erste und zweite Hülse 15, 16 und bewirkt, dass nach dem Deformieren und nach dem Zurückschieben des Dorns 14 ebenfalls der Käfig 21 der ersten Hülse 15 wieder komplett rückseitig aus dem Stutzen 4 durch die Federkraft herausgeschoben wird. Der Stutzen 4 verbleibt hingegen fest befestigt in der Wandungsöffnung. Nach Entnahme des Deformationswerkzeugs 2 ist der Stutzen 4 in der Wandungsöffnung befestigt. Durch die von einem vorderseitigen Ende 5 zu einem rückseitigen Ende des Stutzens 4 erstreckende Durchgangsöffnung 7 kann nun ein Kabel durchgeführt werden. Durch Verspannen des Spannelementes 9, wie z.B. dem Anschrauben einer Spannmutter auf einem am vorderseitigen Ende 5 des Stutzens 4 angeordneten Aussengewinde 32, kann das zumindest bereichsweise in dem Stutzen 4 und in axialer Richtung zwischen dem Stutzen 4 und dem Spannelement 9 angeordnete Dichtelement 12 befestigt werden. Die fertig montierte Kabelverschraubung 1 mit Kabel ist in **Figur 7** ersichtlich.

### LISTE DER BEZUGSZEICHEN

| | | | |
|---|---|---|---|
| 1 | Kabelverschraubung | 19 | Vorderseitiges Ende (erste Hülse) |
| 2 | Deformationswerkzeug | | |
| 3 | Wandung | 20 | Rückseitiges Ende (erste Hülse) |
| 4 | Stutzen | | |
| 5 | Vorderseitiges Ende (Stutzen) | 21 | Käfig |
| 6 | Rückseitiges Ende (Stutzen) | 22 | Kugel |
| 7 | Durchgangsöffnung | 23 | Aufnahmeöffnung |
| 8 | Deformationsabschnitt | 24 | Lauffläche |
| 9 | Spannelement | 25 | Anschlag |
| 10 | Vorderseite | 26 | Aufnahmeraum |
| 11 | Rückseite | 27 | Gleitlager |
| 12 | Dichtelement | 28 | Erste Schulter |
| 13 | Kragen | 29 | Zweite Schulter |
| 14 | Dorn | 30 | Dritte Schulter |
| 15 | Erste Hülse | 31 | Feder |
| 16 | Zweite Hülse | 32 | Aussengewinde |
| 17 | Vorderseitiges Ende (Dorn) | 33 | Schaft |
| 18 | Rückseitiges Ende (Dorn) | 34 | Abdeckung |
| | | 35 | Klemmelement |

## Patentansprüche

1. Verfahren zum Befestigen einer Kabelverschraubung (1) an einer Wandung (3), das Verfahren umfassend die folgenden Verfahrensschritte:
a. Bereitstellen der Kabelverschraubung (1) umfassend einen Stutzen (4) und ein Spannelement (9),
i. wobei der Stutzen (4) eine sich von einem vorderseitigen Ende (5) zu einem rückseitigen Ende (6) erstreckende Durchgangsöffnung (7) aufweist,
ii. der Stutzen (4) einen röhrenförmigen Deformationsabschnitt (8) und einen Kragen (13) zur Auflage an der Wandung (3) aufweist, und
iii. das Spannelement (9) an dem vorderseitigen Ende (5) des Stutzens (4) befestigbar ist;
b. Bereitstellen eines Deformationswerkzeuges (2);
c. Einstecken des Stutzens (4) von einer Vorderseite (10) der Wandung (3) aus in die Wandungsöffnung, welche sich in eine axiale Richtung erstreckt, sodass der Deformationsabschnitt (8) zumindest bereichsweise von einer Rückseite (11) der Wandung (3) abragt;
d. Deformieren des Deformationsabschnitts (8) durch das Deformationswerkzeug (2), sodass der Deformationsabschnitt (8) radial zumindest bereichsweise über eine Kontur der Wandungsöffnung hinausragt und dadurch der Kragen (13) an die Vorderseite (10) der Wandung (3) gezogen und die Wandung (3) zwischen dem Kragen (4) und dem Deformationsabschnitt (8) geklemmt wird;
e. Entfernen des Deformationswerkzeugs (2);
f. Befestigen des Spannelementes (9) an dem vorderseitigen Ende (5) des Stutzens (4) von der Vorderseite (10) der Wandung (3) her.

2. Verfahren gemäss Patentanspruch 1, das Verfahren weiter umfassend das bereichsweise Einführen des Deformationswerkzeugs (2) von dem vorderseitigen Ende des Stutzens (4) in die Durchgangsöffnung (7).

3. Verfahren gemäss einem der vorangehenden Patentansprüche, **dadurch gekennzeichnet, dass** die Deformation des Deformationsabschnitts (8) sukzessive von dem rückseitigen Ende (6) des Stutzens (4) in axialer Richtung zur Wandungsöffnung hin, insbesondere bis zur Wandungsöffnung hin, erfolgt.

4. Verfahren gemäss einem der vorangehenden Patentansprüche, **dadurch gekennzeichnet, dass** die Deformation lediglich an diskreten Punkten um den Umfang des Deformationsabschnitts (8) erfolgt.

5. Verfahren gemäss Patentanspruch 4, **dadurch gekennzeichnet, dass** der Deformationsabschnitt (8) nach dem Deformieren aus axialer Richtung betrachtet einen eckigen Querschnitt aufweist.

6. Verfahren gemäss einem der vorangehenden Patentansprüche, **dadurch gekennzeichnet, dass** die Deformation durch das Aufbringen einer Deformationskraft in radialer und/oder axialer Richtung erfolgt.

7. Verfahren gemäss Patentanspruch 6, **dadurch gekennzeichnet, dass** die Deformationskraft eine Zugkraft ist, welche normal zur Vorderseite (10) der Wandung (3) gerichtet ist und auf einen Dorn (14) des Deformationswerkzeugs (2) wirkt.

8. Verfahren gemäss Patentanspruch 7, **dadurch gekennzeichnet, dass** die Deformation beim Erreichen eines definierten Kraftniveaus der Deformationskraft und/oder beim Erreichen eines definierten Verschiebungswegs des Dorns (14) automatisch beendet wird.

9. Verfahren gemäss Patentanspruch 8, **dadurch gekennzeichnet, dass** das definierte Kraftniveau so ausgelegt ist, dass dieses überschritten wird, wenn die Deformation einen wandungsnah angeordneten Bereich des Deformationsabschnitts (8) erreicht.

10. Deformationswerkzeug (2) zum Befestigen eines Stutzens (4) einer Kabelverschraubung (1) in einer Wandungsöffnung umfassend
a. einen in eine axiale Richtung von einem vorderseitigen Ende (17) zu einem rückseitigen Ende (18) ersteckenden Dorn (14);
b. eine auf dem Dorn (14) angeordnete und im Bezug zum Dorn (14) relativ verschiebbare erste Hülse (15);
c. mindestens einen an einem rückseitigen Ende (20) der ersten Hülse (15) angeordneten, radial verschiebbaren Deformationskörper (22); wobei
d. der Dorn (14) mindestens eine schräge Lauffläche (24) für die jeweiligen Deformationskörper (22) aufweist, die derart ausgelegt ist, dass bei einem relativen Verschieben des Dorns (14) in Bezug zur ersten Hülse (15), der mindestens eine Deformationskörper (22) entlang der mindestens einen Lauffläche (24) läuft und radial nach aussen gedrückt wird.

11. Deformationswerkzeug (2) gemäss Patentanspruch 10, **dadurch gekennzeichnet, dass** der Dorn (14) relativ zur ersten Hülse (15) in axialer Richtung verschiebbar ist und die mindestens eine Lauffläche (24) in Bezug zu einer Mittelachse des Dorns (14) schräg zuläuft.

12. Deformationswerkzeug (2) gemäss einem der vorangehenden Patentansprüche 10 oder 11, **dadurch gekennzeichnet, dass** der mindestens eine Deformationskörper (22) durch relatives Verschieben des Dorns (14) in Bezug zu der ersten Hülse (15) von einer ersten Position, in welcher der jeweilige Deformationskörper (22) radial innerhalb einer Einführkontur des Deformationswerkzeuges angeordnet ist, in eine zweite Position, in welcher der Deformationskörper (22) bereichsweise radial ausserhalb der Einführkontur angeordnet ist, verschiebbar ist.

13. Deformationswerkzeug (2) gemäss einem der vorangehenden Patentansprüche 10 bis 12, **dadurch gekennzeichnet, dass** der Dorn (14) an seinem rückseitigen Ende (18) einen Anschlag (25) in axialer Richtung für die erste Hülse (15) aufweist.

14. Deformationswerkzeug (2) gemäss einem der vorangehenden Patentansprüche 10 bis 13, **dadurch gekennzeichnet, dass** das Deformationswerkzeug (2) weiter eine die erste Hülse (15) umgebene zweite Hülse (16) umfasst und zwischen der ersten und zweiten Hülse (15, 16) ein Aufnahmeraum (26) für den Stutzen (4) der Kabelverschraubung (1) ausgebildet wird.

15. Deformationswerkzeug (2) gemäss Patentanspruch 14, **dadurch gekennzeichnet, dass** die zweite Hülse (16) ein Klemmelement (35) zum klemmenden Halten des Stutzens (4) in dem Aufnahmeraum (26) aufweist.

16. Deformationswerkzeug (2) gemäss Patentanspruch 14 oder 15, **dadurch gekennzeichnet, dass** der Aufnahmeraum (26) derart ausgelegt ist, dass dieser ein vorderseitiges Ende (5) des Stutzens (4), welcher in dem Aufnahmeraum (26) angeordnet ist, umgibt.

17. Deformationswerkzeug (2) gemäss einem der vorangehenden Patentansprüche 13 bis 16, **dadurch gekennzeichnet, dass** die zweite Hülse (16) in axialer Richtung eine Schulter (30) zur Anlage an einem Kragen (13) der Kabelverschraubung (1) aufweist, wobei der Kragen (13) zur Auflage der Kabelverschraubung (1) an der Wandung (3) dient.

18. Deformationswerkzeug (2) gemäss einem der vorangehenden Patentansprüche 13 bis 17, **dadurch gekennzeichnet, dass** in radialer Richtung zwischen dem Dorn (14) und der ersten Hülse (15) und/oder zwischen der ersten Hülse (15) und der zweiten Hülse (16) Gleitlager (27) angeordnet sind.

19. Deformationswerkzeug (2) gemäss einem der vorangehenden Patentansprüche 10 bis 18, **dadurch gekennzeichnet, dass** mindestens drei Deformationskörper (22) vorhanden sind, welche um den Umfang des rückseitigen Endes (18) des Dorns (14) verteilt angeordnet sind.

20. Deformationswerkzeug (2) gemäss Patentanspruch 19, **dadurch gekennzeichnet, dass** die mindestens drei Deformationskörper (22) Kugeln sind.

21. Deformationswerkzeug (2) gemäss einem der vorangehenden Patentansprüche 19 oder 20, **dadurch gekennzeichnet, dass** an einem rückseitigen Ende (20) der ersten Hülse (15) ein Käfig (21) ausgeformt ist, in welchem die mindestens drei Deformationskörper (22) unverlierbar gelagert sind.

22. Deformationswerkzeug (2) gemäss Patentanspruch 21, **dadurch gekennzeichnet, dass** der Käfig (21) pro Deformationskörper (22) eine Aufnahmeöffnung (23) aufweist, welche sich in eine radiale Richtung von einer Innenseite zu einer Aussenseite der ersten Hülse (15) erstreckt.

23. Deformationswerkzeug (2) gemäss Patentanspruch 22, **dadurch gekennzeichnet, dass** die jeweiligen Aufnahmeöffnungen (23) aus der axialen Richtung betrachtet tonnenförmig ausgestaltet sind, sodass die jeweiligen radial verschiebbaren Deformationskörper unverlierbar gehalten werden.

24. Gehäuse mit einer in einer Wandung (3) des Gehäuses angeordneten Wandungsöffnung, in welcher ein Stutzen einer Kabelverschraubung irreversibel befestigt ist, wobei ein Deformationsabschnitt (8) des Stutzens derart irreversibel deformiert ist, dass dieser radial zumindest bereichsweise über eine Kontur der Wandungsöffnung hinausragt.
